# EUROPEAN PATENT SPECIFICATION

(11) **EP 4 079 393 B1**
(45) Date of publication and mention of the grant of the patent: **04.06.2025**
(21) Application number: 21169534.1
(22) Date of filing: 20.04.2021
(51) Int. Cl.: B01D 46/00, B01D 50/00, B01D 46/52

(54) **AIR CLEANER ARRANGEMENT AND ASSOCIATED FILTER ELEMENTS**
LUFTREINIGERANORDNUNG UND ZUGEHÖRIGE FILTERELEMENTE
AGENCEMENT D'ÉPURATEUR D'AIR ET ÉLÉMENTS DE FILTRE ASSOCIÉS

(43) Date of publication of application: 26.10.2022
(73) Proprietor: Donaldson Company, Inc., Bloomington, MN 55431 (US)
(72) Inventor: VERSTRAETE, Mathijs, Minneapolis, 55440-1299 (US); CATOOR, Bart, Minneapolis, 55440-1299 (US); DECOSTER, Kristof, Minneapolis, 55440-1299 (US)
(74) Representative: IPLodge bv

(56) References cited:
- WO-A1-99/37386
- DE-A1- 102008 027 847
- US-A1- 2020 047 105

## Description

### Technical field

The present disclosure relates to filter arrangements and filter elements, typically for use in filtering air, such as intake air for internal combustion engines.

### Background art

Air streams can carry contaminant material such as dust and liquid particulate therein. In many instances, it is desired to filter some or all the contaminant material from the air stream. For example, air flow streams to engines (for example combustion air streams) for motorized vehicles or for power generation equipment, gas streams to gas turbine systems and air streams to various combustion furnaces, carry particulate contaminant therein that should be filtered. It is preferred, for such systems, that selected contaminant material be removed from (or have its level reduced in) the air. A variety of air filter arrangements have been developed for contaminant removal.

There exists a need in industry to reduce the size and weight of the air filtration systems and filter elements (also called filter cartridges) included in automotive or heavy-duty vehicles. These air filtration systems (and cartridges) need to be compact and should be integrated with other components of the vehicle in a compact space.

Therefore, systems are needed that have a large degree of design flexibility.

There is also a need to guarantee the end user that a filter element is suitable for the respective system, for instance by making the installation of an inappropriate filter element mechanically impossible. Indeed, filter elements are typically developed for a specific type of vehicle and predetermined working and ambient conditions of such a vehicle. A lot of research and development goes into the development and selection of filtration media, analysis of fluid flow characteristics, dust removal capabilities, behaviour under simulated and real vibration exposure etc. Positioning a wrong filter element in a filter housing may negatively impact the filtration performance of a certain system, and the functioning of the engine to which the filtered air is fed. It happens that engines fail because of the prolonged use of an inappropriate filter element.

WO9937386 discloses a liquid separator containing a housing which consists of a vessel and a lid closing off the lid, and a filter element provided with an outwardly protruding collar with which it is fixed to the housing and whereby, between this filter element and the housing, are provided at least two seals that are provided in a groove in the filter element, one of which has been provided in a groove in the collar and fitting up to the vessel, whereas the other fits up to the lid, so that the part of the filter element containing the grooves with the seals provides for the seal between the vessel and the lid.

DE102008027847 discloses an air filter element having a folded filter medium which has an outer boundary that is provided with a seal, which works together with a retainer housing. The seal has two substantially parallel sealing surfaces.

US2020047105 discloses a filter with multiple standing compression seals that work together to seal against the mating filter housing assembly.

There exists a need in industry for improved and alternative filter arrangements.

There also exists a need to reduce manufacturing costs of filtration systems, for instance by allowing the reuse/common use of certain components in more than one filter arrangement, i.e., for different types of vehicles, for instance for different brands/manufacturers.

### Summary of the disclosure

It is an objective of the present disclosure to provide a filter element according to claim 1, and to provide an associated filter assembly.

In a first aspect of the present disclosure, a filter element for the filtration of gaseous fluids is disclosed, comprising a filter media pack having a longitudinal axis. It comprises a circumferential seal support structure which is sealingly coupled to a sidewall of the media pack. The seal support structure is therefor preferably connected with the media pack in an airtight manner, directly or indirectly, permanently or removably. The seal support structure further comprises a first seal and a second seal. The axial projections of the first and the second seal along the longitudinal axis on a plane perpendicular to the longitudinal axis define a first and a second closed perimeter. The areas corresponding to the first and the second closed perimeter comprise a non-overlap region.

It is an advantage of embodiments of the present disclosure that they present an additional degree of design flexibility for filter elements and associated filter assemblies.

For instance, a first seal can be arranged for sealing against a first sealing surface of a main housing portion, while a second seal can be arranged for sealing against a complementary housing portion as for instance a housing end cover or precleaner arrangement. By having seals that present a non-overlap portion in projection, the relation between housing main part and complementary housing portion can be different than in the state of the art.

Further, the shape of the complementary housing portion and the main housing portion can be decoupled to a certain extent.

Also, a filter main housing can be used with different complementary housing portions, or a complementary housing portion can be used with different filter main housing portions, if the filter element is suitably designed for it; this can be advantageous as higher volumes can be produced and component can be used across different air cleaner systems.

It is another advantage that the presence of a non-overlap portion aids the user in placing the right filter element in a certain housing and helps in identifying the right position of the filter element.

For practical reasons, the disclosure has been claimed by referring to the perimeters of the axial projections of the first and the second seal along the longitudinal axis on a plane perpendicular to the longitudinal axis. Alternatively, and thus considered to be part of this disclosure, one could refer to the perimeters defined by the projections of the sealing surfaces which are defined by the first and second seals.

Preferably, the filter and thus filter media is suitable for filtering air.

According to preferred embodiments, the areas defined by the closed perimeters also comprise an overlap region.

Preferably, the non-overlap region has a surface which comprises at least 10%, or at least 20% or at least 30% of the smallest area of the areas defined by the closed perimeters.

According to preferred embodiments, the non-overlap region has a surface area larger than 5 cm², or larger than 10 cm², or larger than 25 cm².

According to preferred embodiments, the non-overlap region has no rotational symmetry along the longitudinal axis. This is the case for instance, but not only, when the non overlap region consists of a single area corresponding to a local deviation between the two closed perimeters, and the closed perimeters follow one another/correspond to one another for the other, complementary part of their perimeters. This could for instance, but not only, also be the case, when the non overlap region is defined as a region in between a concave section of the perimeter of the projection of one of the seals and a bridging section of the projection of the other seal, the bridging section bridging all or part of the concave section.

The non-overlap region is arranged asymmetrically with respect to the first and/or the second perimeter.

According to preferred embodiments, the first and the second closed perimeter enclose a projection of the filter media pack along the longitudinal axis on the plane.

The media pack can comprise any type of media, including fluted (also called z-type) media as well as pleated media configurations. The fluted media can be stacked or wound media. The media pack comprising fluted media can further comprise a wrap of shell provided circumferentially around its outer surface. Such a wrap or shell is typically also connected with the filter media in an airtight manner.

According to preferred embodiments, the areas defined by the perimeters have different shape.

According to preferred embodiments, the areas defined by the perimeters have similar shape but different size.

According to preferred embodiments, the perimeters have a common centroid.

This can be convenient if the element is used in a relatively straight air cleaner configuration, for instance in air cleaner configurations where housing cover of precleaner have a longitudinal axis that substantially corresponds to the longitudinal axis of the filter element.

According to preferred embodiments, the perimeters have a different centroid.

This can be convenient if the element is used in air cleaner configurations where one or both of the main filter housing portion and complementary filter housing portion has/have a longitudinal axis that is substantially off set from the longitudinal axis of the filter element.

According to preferred embodiments, the areas defined by the closed perimeters differ in surface area for at least 10%, or for at least 20% or for at least 30% or for at least 50%.

According to preferred embodiments, one of the first perimeter or the second perimeter fully encircles the other one.

According to preferred embodiments, the seal support structure comprises at least one pass-through opening for gaseous fluids in an area of the seal support structure corresponding to the non-overlap region. The pass-through opening itself can comprise or be defined by a third seal.

According to preferred embodiments, the seal support structure comprises one or more electronic devices in an area of the seal support structure corresponding to the non-overlap region. The same can also apply to the main housing portion, i.e. the main housing portion can comprise one or more electronic devices in an area of the seal support structure corresponding to the non-overlap region.

It is an advantage of embodiments of the present disclosure that the non-overlap region in the projection, which corresponds to a relative in-plane deviation between the first and second seal, can provide a space for positioning functional features.

According to preferred embodiments, the seal support structure has an axial extent smaller than 10 cm, or smaller than 8 cm or smaller then 5 cm.

According to alternative preferred embodiments, the seal support structure has an axial extent of at least 10 cm, or at least 20 cm, or at least 30 cm. Is such embodiments, the filter element/filter media pack preferably comprises a shell on its outer contour, and the shell preferably constitutes at least part of the seal support structure.

According to preferred embodiments, the first and the second seal are arranged around the media pack. In such configurations, the first and second seals are arranged along or near the sidewall of the media pack, e.g., along the sidewall of a wound fluted media pack, which optionally comprises a wrap or shell.

According to preferred embodiments, the first seal and the second seal are separate seals, which are disconnected. Preferably, the first and second seal surfaces are formed by separate seals.

According to preferred embodiments, the first seal and the second seals comprise a Thermoplastic Elastomer (TPE) material. Alternatively, one or both seals can comprise Polyurethane (PU) seal material or any other material known to the skilled person in the field of air filtration systems.

The first and/or second seal can be embodied as lip seals, preferably comprising TPE, which deform resiliently and create a seal with a sealing surface when being brought in close contact with a corresponding sealing surface. Alternatively, or in combination therewith, one or both seals can comprise a compressible seal, for instance comprising PU.

According to preferred embodiments, each of the first and the second seals is arranged in a single plane, a first plane and a second plane respectively. Preferably, the corresponding first and second sealing surfaces are arranged in or along a single plane.

The first and second planes are preferably parallel. Preferably, one or both of the first and second planes is/are perpendicular on the longitudinal axis of the filter element.

The first plane and the second plane are preferably not identical and cross the longitudinal axis of the filter element at different axial heights.

The distance between the first and the second plane is preferably larger than 0.5cm, or larger than 1cm, or larger than 2cm, or larger than 3cm, or larger than 4cm, or larger than 5cm, or larger than 10cm.

According to preferred embodiments, one of the first or the second seals follows the sidewall of the media pack.

According to preferred embodiments, one of the first and the second seal follows the sidewall of the media pack over an angular range (about the longitudinal axis of the filter media pack) of at least 180°, preferably at least 210°, preferably at least 240°, preferably at least 270°, preferably at least 300°, but not completely.

With the formulation "follows the sidewall" it is meant that the respective seal stays within a distance of 3 cm, more preferably 2 cm, more preferably within 1 cm, and most preferably within 0.5 cm, of one another along the sidewall of the filter medium pack.

According to preferred embodiments, the first and the second seal follow each other over an angular range (about the longitudinal axis of the filter media pack) of at least 180°, preferably at least 210°, preferably at least 240°, preferably at least 270°, preferably at least 300°. The respective seals preferably hereby stay within a distance of 3 cm, more preferably 2 cm, more preferably within 1 cm, and most preferably within 0.5 cm, in projection. Preferably, both seals follow the media pack in the same range that they follow each other.

According to preferred embodiments, the first and the second seals follow one another along the circumference of the media pack, except for their respective portions which correspond to the non-overlap region.

According to preferred embodiments, the non-overlap region corresponds to an angular range for which one of the first or second seals does not follow the media pack.

According to preferred embodiments, the non overlap region consists of a single area corresponding to a local deviation between the two closed perimeters, and the closed perimeters follow one another/correspond to one another for the other, complementary (nondeviating) part of their perimeters.

Preferably, the non-overlap region is defined as a region in between a concave section of the perimeter of the projection of one of the seals and a bridging section of the projection of the other seal, the bridging section bridging all or part of the concave section, in projection.

According to preferred embodiments, the cross section of the filter media pack comprises convex and concave curves.

According to preferred embodiments, the filter media pack has no rotational symmetry along the longitudinal axis.

According to preferred embodiments, at least one of the first seal and the second seal has no rotational symmetry along the longitudinal axis.

According to preferred embodiments, the filter element has a first axial end and a second axial end, and the circumferential seal support structure is arranged near or at one of the axial ends of the filter element.

According to preferred embodiments, the filter element has a first and a second axial end, and the circumferential seal support structure is arranged in between and remote from the first and second axial ends of the filter element.

According to preferred embodiments, the seal support structure bridges the gap between the first and second seal in a sealingly, airtight manner, except for an optional feedthrough opening in the seal support structure.

According to preferred embodiments, the seal support structure comprises a base sealingly coupled to a sidewall of the filter media pack and a flange radially extending from the base, the flange having an outer rim, the flange defining a first side and an opposed second side of the flange respective to the longitudinal axis of the filter media pack, wherein the first and second seals are arranged on or adjacent to the flange.

According to preferred embodiments, the first and second seals are arranged at different locations selected from the set of (on the first side of the flange, on the second side of the flange, on the outer rim, on the base on the first side of the flange, on the base on the second side of the flange).

According to preferred embodiments, at least one of the seals is arranged on the flange. Both the first and second seals can be arranged on the flange.

According to preferred embodiments, at least one of the seals is arranged on the outer rim of the flange.

In certain embodiments, at least one of the seals is arranged on the base. Both the first and second seals can be arranged on the base.

According to preferred embodiments, the first and the second seal are adapted for sealing in radial direction.

According to preferred embodiments, the first and the second seal are adapted for sealing in axial direction.

According to preferred embodiments, the first seal is adapted for sealing in radial direction and the second seal is adapted for sealing in axial direction.

According to a second aspect of the present disclosure, a filter assembly is disclosed, comprising a housing, the housing comprising a main housing portion and a complementary housing portion, and a filter element according to any of embodiments of the first aspect.

The first seal forms a seal between the filter element and the main housing portion, and the second seal forms a seal between the filter element and the complementary housing portion.

According to preferred embodiments, the filter element comprises a seal support structure comprising a base sealingly coupled to a sidewall of the filter media pack and a flange radially extending from the base, the flange having an outer rim, the flange defining a first side and an opposed second side of the flange respective to the longitudinal axis of the filter media pack, wherein the first and second seals are arranged on or adjacent to the flange. The flange it thereby bridging the gap between the two seals, creating an airtight connection between both seals and thus between the main housing portion and the complementary housing portion.

In certain embodiments, the gap between the first and second seals would not otherwise be bridged by any part of the filter housing.

According to preferred embodiments, the complementary housing portion comprises a precleaner device or housing cover. Precleaner devices as such are known in the art and are used to remove large particles and other component out of the incoming air flow, before the flow reaches the filter element.

According to preferred embodiments, the assembly comprises a filter element wherein the seal support structure comprises at least one pass-through for gaseous fluids in an area of the seal support structure corresponding to the non-overlap region, and further comprises a precleaner scavenging tube which is connected with the at least one pass-through in the seal support structure.

Features and advantages disclosed for one of the above aspects of the present disclosure are hereby also implicitly disclosed for the other aspects, *mutatis mutandis,* as the skilled person will recognize. Especially, aspects described for the filter element in the context of the filter assembly aspect, are also applicable and considered disclosed for the filter element or cartridge, and vice versa.

### Brief description of the drawings

The disclosure will be further elucidated by means of the following description and the appended figures.

The examples corresponding to Fig. 2(a) and (b), Fig.6 (a) to (c), Fig. 7(a) to (d), Fig. 8 (a) and (b) have not been claimed.
- Fig. 1 (a) to (c) and Fig. 5. (a) to (d) illustrate a first preferred embodiment of the present disclosure.
- Fig. 2 (a) and Fig. 7 (a) to (d) illustrate a second embodiment of the present disclosure.
- Fig. 2 (b) and Fig. 6 (a) to (c) illustrate a third preferred embodiment of the present disclosure.
- Fig. 3 (a) to (c), and Fig. 4 (a) to (c) illustrate a fourth embodiment of the present disclosure.
- Fig. 8 (a) to (e) illustrates different non-overlap regions in accordance with embodiments of the present disclosure.
- Fig. 9 (a) to (f) schematically illustrate embodiments of the present disclosure with different positioning of a base and radially extending flange.
- Fig. 10(a) to (d) and Fig. 11 schematically illustrate embodiments of the present disclosure with different positioning of a first and a second seal on the seal support structure.

### Detailed description of preferred embodiments

The present disclosure will be described with respect to particular embodiments and with reference to certain drawings, but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

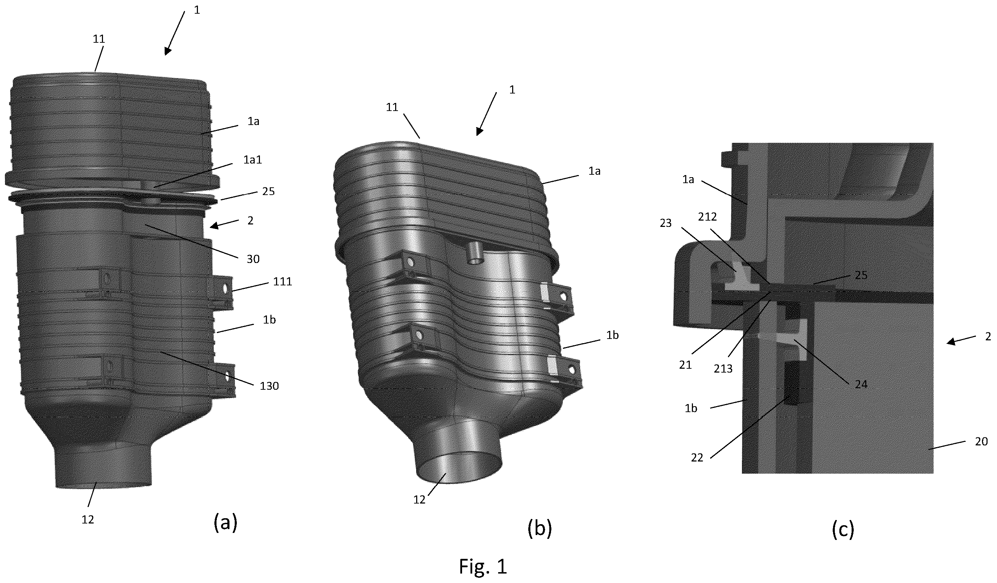

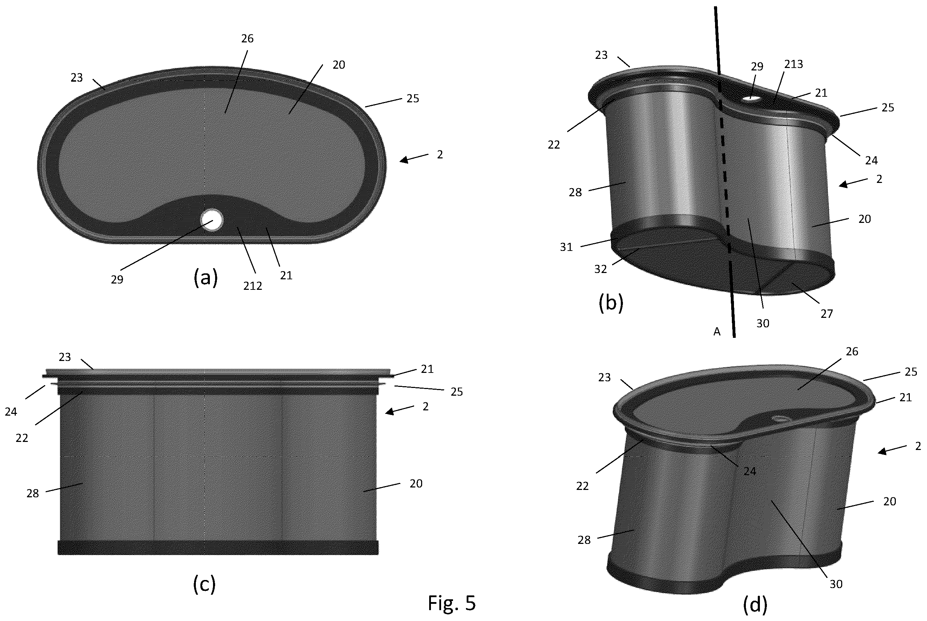

Fig. 1(a) to (c) and Fig. 5. (a) to (d) illustrate a first preferred embodiment of the present disclosure. An air filter assembly (1,2) comprises a housing (1) and an associated filter element (2) arranged in the housing (1). The housing (1) comprises a main housing portion (1b) and a complementary housing portion (1a). The complementary housing portion (1a) is here embodied as a precleaner device, but can for instance be a filter housing cover, which preferably comprises one or more air inlet openings. The precleaner device or housing cover (1a) is preferably removably connected to the main housing portion (1b), such that it can be removed for servicing the filter element (2). The filter element (2) is arranged in the main housing portion, such that all or substantially all the air that is flowing through the filter housing (1) from the inlet (11) to the outlet (12) must pass through the filter element (2). The filter element (2) is typically provided with at least one seal for sealing the filter element (2) against the inner wall of the filter housing (1). In the present disclosure, the filter element (2) comprises at least 2 seals (23, 24) to provide this general functionality and more.

The precleaner arrangement (1a) comprises one or more inlet openings (11) for air intake and a mechanism to provide a rough, inertial separation of dirt from the incoming air stream without the need for a replaceable filter element (2). The precleaner can for instance comprise small, vaned tubes that cause the air to spin very rapidly, thereby ejecting dust particles and dirt from the air flow before it is fed to an air filter element (2). The precleaner device (1a) may for instance also comprise a dust evacuation valve arranged and adapted for removing dust from the precleaner device, preferably without taking in extra ambient air through the dust evacuation valve.

The filter element (2) comprises a filter media pack (20) having a longitudinal axis (A). The filter media pack (20) can comprise a filter media of any known type, preferably a fluted or z-type filter media, but can for instance comprise a pleated media in a configuration that respects the flow direction with respect to a fluted media configuration. The fluted media is preferably a wound fluted media but can for instance also comprise stacked fluted media. The filter media pack (20) comprises an inflow face (26), an outflow face (27) and a side surface (28).

The filter media pack (20) can further comprise a wrap or shell on its outer surface (28).

The filter element (2) comprises a circumferential seal support structure (25) which is sealingly coupled to a sidewall (28) of the media pack (20). The seal support structure (25) is therefor preferably connected with the media pack (20) in an airtight manner, directly or indirectly, permanently or removably. It can for instance be directly bonded of glued to the media pack (20). In case the filter media pack comprises a shell, for instance in the form of a tubular protection layer on the outer surface (28), e.g., made of hard plastic, the seal support structure (25) and the shell structure can be unitary.

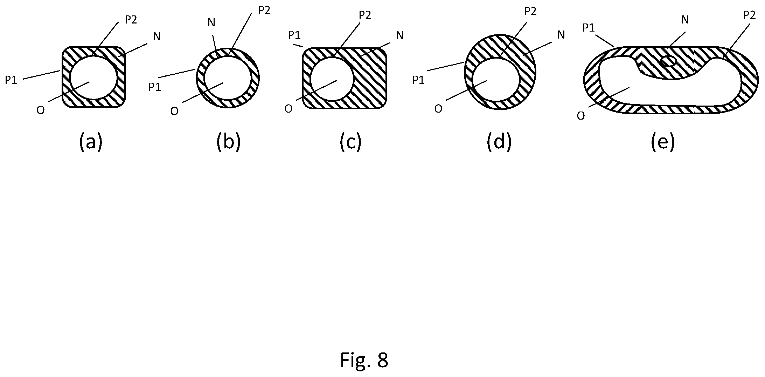

The seal support structure further comprises a first seal (23) and a second seal (24). The axial projections of the first and the second seal along the longitudinal axis (A) on a plane perpendicular to the longitudinal axis (A) define a first (P1) and a second closed perimeter (P2). The areas corresponding to the first and the second closed perimeter (P1, P2) comprise a non-overlap region (N). This is illustrated for instance schematically in Fig. 8 (a) to (e), Fig. 8(e) being similar to the configuration of the first embodiment.

The non-overlap region has a surface which comprises more than 10% of the smallest area of the areas defined by the closed perimeters, to provide a substantial amount of extra area created in a bridging section of the seal support structure (25) between the first (23) and second (24) seals. In this particular embodiment, the smallest area is the area defined by perimeter P2, corresponding to the smaller seal (24), arranged for sealing between the housing main part (1a) and the filter element (2).

It can be noted that the non-overlap region (N) has no rotational symmetry, and that the non-overlap region is (N) arranged asymmetrically with respect to the first (P1) and/or the second perimeter (P2).

As both seals (23) and (24) surround the filter media pack (20), both the first and the second closed perimeter (P1, P2) enclose a projection of the filter media pack (20) along the longitudinal axis on the plane perpendicular to the longitudinal axis (A).

The areas defined by the perimeters P1 and P2 have different shape, and the first perimeter or the second perimeter fully encircles the other one.

The perimeters have a different centroid.

The areas defined by the closed perimeters differ in surface area for more than 10%.

The seal support structure (25) comprises at least one pass-through opening (29) for gaseous fluids in an area of the seal support structure corresponding to the non-overlap region. The pass-through opening preferably comprises and is delimited by a gasket/seal, which can couple in an airtight manner with an outlet spud (1a1) of the precleaner device (1a).

It will be appreciated by the skilled person that, alternatively or in combination therewith, the area of the seal support structure corresponding to the non-overlap region can also comprise one or more electronic devices as for instance temperature, pressure, humidity, or other sensors, which can be wired of wirelessly connected.

The first seal (23) and the second seal (24) are separate seals, and are formed as TPE seals, for instance of the lip-seal type.

Each of the first and the second seals (23, 24) is arranged in a single plane, a first plane and a second plane respectively, the first and second planes being preferably parallel but not identical, in other words the first and second planes being offset.

The second seal (24) follows the sidewall (28) of the media pack (20) completely, i.e., over 360° around the angular axis (A). The cross section of the filter media pack, perpendicular on the longitudinal axis (A) describes a kidney-type shape which comprises convex and concave curves. For instance, a concave section (30) is present, which is advantageously used as described below. The second seal (24) thus also follows the concave section (30) of the media pack sidewall (28).

The first seal (23) does follow the contour/sidewall of the filter media pack to a large extent, in fact everywhere apart from the region corresponding to the concave section (30) in the media pack sidewall (28).

A main part of the non-overlap region thus corresponds to an angular range for which the first or second seal does not follow the media pack sidewall (28).

The first and second seals also follow one another along the circumference of the media pack, except for their respective portions which correspond to the non-overlap region.

It can be noted that the filter media pack has no rotational symmetry along the longitudinal axis (A), and that none of the first seal (23) and the second seal (24) has a rotational symmetry along the longitudinal axis.

The filter media pack has a first axial end (near inflow face (26)) and a second axial end (near outflow face (27)), and the circumferential seal support structure (25) is arranged near the first axial end of the filter media pack (20). Optionally, a second support structure, e.g., a support ring (31), can be provided at or near the second axial end of the filter media pack (20). The second support structure may for instance comprise one or more antitelescoping ribs (32).

In the present embodiment, the seal support structure comprises a base (22) sealingly coupled to a sidewall (28) of the filter media pack (20) and a flange (21) radially extending from the base (22), the flange having an outer rim (211), an upper wall (212) and a lower wall (213) and defining a first side and an opposed second side of the flange respective to the longitudinal axis of the filter media pack, wherein the first seal (23) is arranged on the flange (21), on the flange sidewall (212), on the first side and the second seal (24) is provided on the base (22) on the second side.

The first seal (23) is arranged and configured for providing a seal in axial direction. The second seal (24) is arranged and configured for providing a seal in radial direction.

The flange (21) generally extends along a single plane perpendicular on the longitudinal axis (A) and describes a generally obround shape, not having concave sections.

It will be recognised by the skilled person that embodiments of the present disclosure allow for one or more gaps to be present between the projected perimeters of the general outer walls of a main (1b) and complementary housing portion (1a), allowing a degree of freedom in the design of both housing parts.

In a certain view, the seal support structure, comprising the flange, thus performs the function of bridging the gap between the first and second seal (23, 24) in a sealingly, airtight manner (except for an optional feedthrough opening (29) in the seal support structure).

The presence of such a gap allows for an object to be placed in the volume defined by the projection of the non-overlapping region, such as a feedthrough or an electronic device. Such a feedthrough can for instance comprise a tube which for instance extends from an inner space in the precleaner device/complementary housing portion along a direction parallel to the longitudinal axis (A).

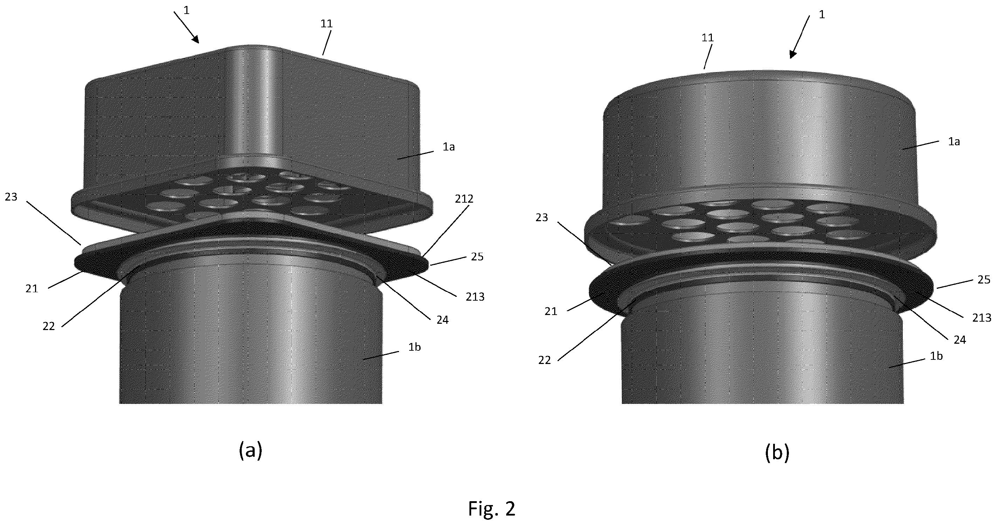

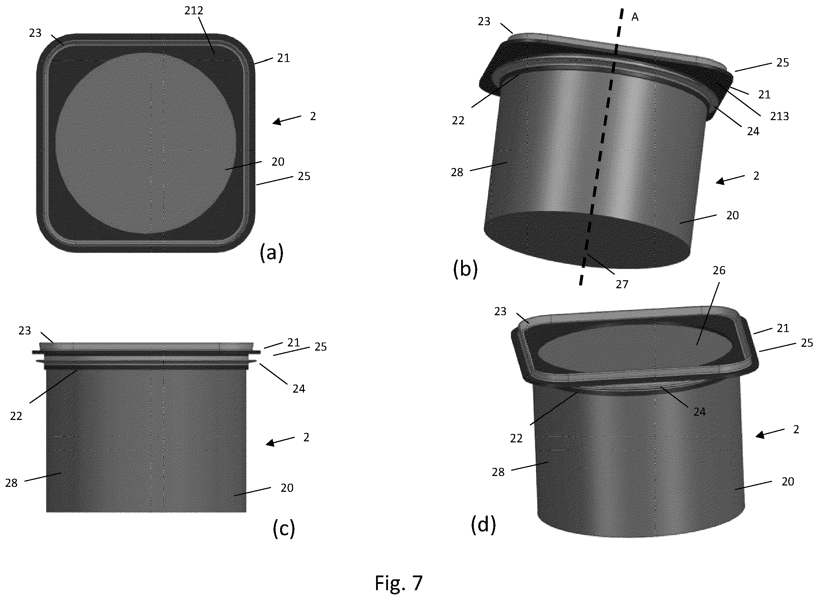

Fig. 2 (a) and Fig. 7 (a) to (d) illustrate a second embodiment of the present disclosure, which has not been claimed. This embodiment is very similar to the first preferred embodiment, as is believed to be apparent to the skilled person, so some of the features will not be described in detail but are applicable as described for the first preferred embodiments.

It differs in that the filter media pack has a cylindrical shape and thus a circular cross section perpendicular on the longitudinal axis (A), and in that the flange and first seal (23) are arranged differently. The seal support structure (25) comprises a base (22) and a radially extending flange (21). The flange generally extends along a single plane perpendicular on the longitudinal axis (A) and describes a generally square shape with rounded corners, having a 4-fold rotational symmetry along the longitudinal axis (A). The same applies to the first seal (23), which is positioned on a first side of the flange (21), on the upper wall (212), following to the outer rim (211) of the flange (21). The first seal (23) thus also extends in a single plane perpendicular to the longitudinal axis (A) and has a square shape with rounded corners. The second seal (24) is provided on the base (22) of the seal support structure, on the other side of the flange (21) with respect to the first seal (23). It follows the side surface (28) of the filter media pack (20) and extends in a single plane perpendicular to the longitudinal axis (A) and has a circular shape. The first seal (23) is arranged and configured for providing a seal in axial direction. The second seal (24) is arranged and configured for providing a seal in radial direction.

Similar to the first preferred embodiment, the filter element (2) of the second preferred embodiment provides the possibility to bridge the gap between a main housing portion (1b) (e.g. having a round cross-section) and a complementary housing portion (1a) (e.g. having a square cross-section) which have generally different sidewall cross-sections perpendicular to their longitudinal direction. Here, the rounded square flange (21) performs that function. In a certain view, a round to square cross-section adapter between a main housing part (1b) and a complementary housing part (a) is provided by the filter element itself.

The filter element (2), as well as the first seal (23) have a 4-fold rotational symmetry. The first and second perimeters have a common centroid.

In this embodiment no pass-through opening has been depicted as it is an optional feature, but such an opening could be provided for instance in a corner region of the non-overlap region, close to one of the rounded corners and in between the round second seal (24) and the first seal (23). A schematic view of the non-overlap region (and overlap region) for this embodiment can be retrieved in Fig. 8(a).

Also, the first and second seal do not generally follow one another, possibly only for some small sections. The first seal (23) does not generally follow the contour shape of the media pack.

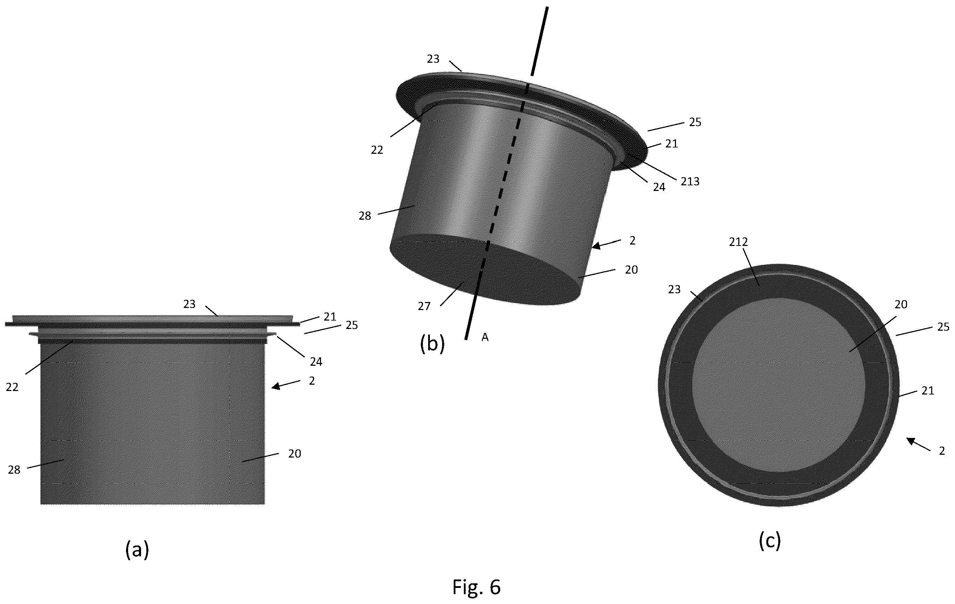

Fig. 2 (b) and Fig. 6 (a) to (c) illustrate a third preferred embodiment of the present disclosure, which has not been claimed.

This embodiment is very similar to the second preferred embodiment, as is believed to be apparent to the skilled person, so some of the features will not be described in detail but are applicable as described for the first and second preferred embodiments.

This embodiment differs from the second preferred embodiment in that the seal support structure (25) comprises a flange which generally extends in a single plane, perpendicular on the longitudinal direction (A), the flange (25) having a circular shape. The second seal (24) follows the cylindrical sidewall (25) of the filter media pack (20) on the base (22) of the seal support structure (25), at a first side of the flange (21). The first seal (23) is arranged on the other side of the flange, on the flange upper wall (212), and follows the outer rim (211) of the flange (21). The first seal (23) extends in a single plane preferably parallel to the plane of the second seal (24) and has a circular shape. The radius of the second seal (24) is smaller than the radius of the first seal (23), such that an annular, ring-type non-overlap region is present in projection. Both perimeters P1 and P2 have a common centroid. A schematic representation thereof can be retrieved in Fig. 8 (b).

In a certain view, an adapter between a main housing part (1b) and a complementary housing part (a) having cylindrical but different radius is provided by the filter element itself.

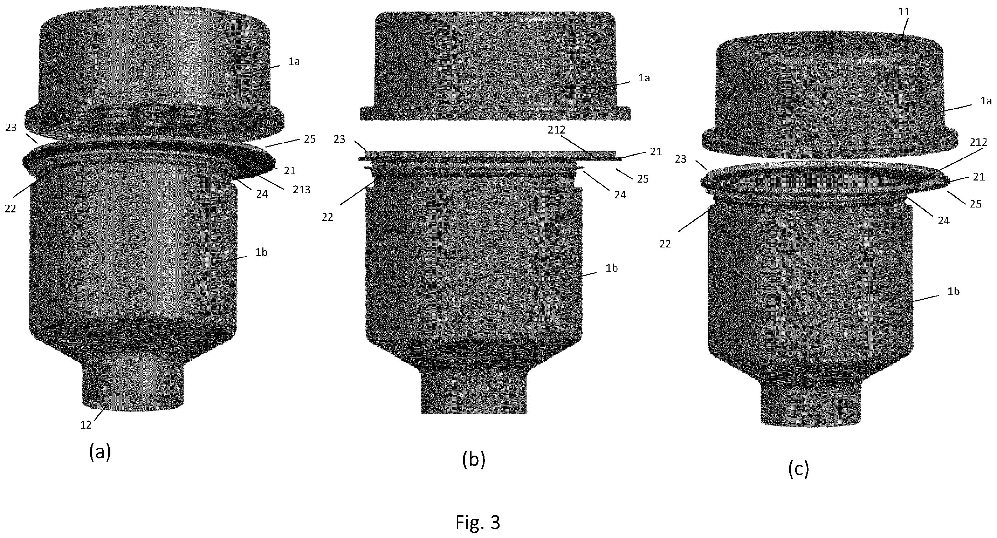

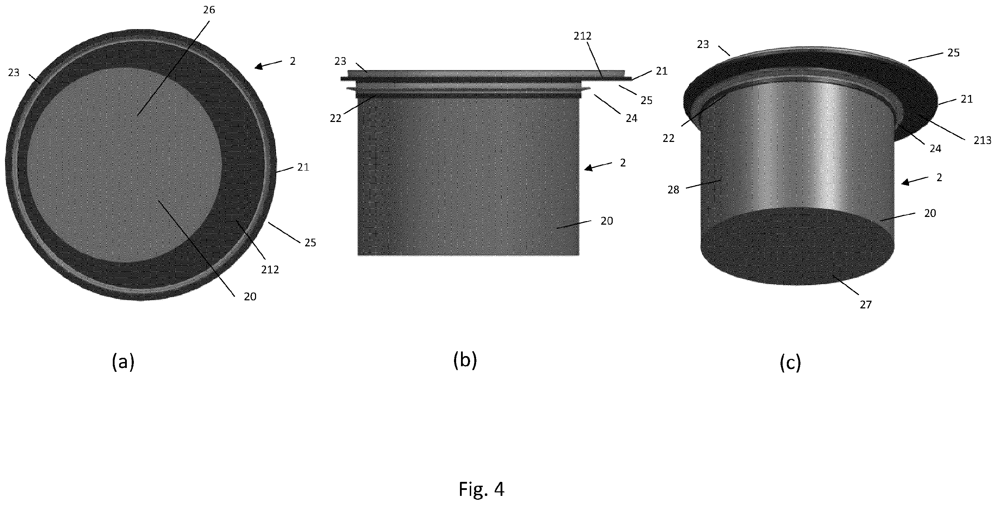

Fig. 3 (a) to (c), Fig. 4 (a) to (c) illustrate a fourth embodiment of the present disclosure. This embodiment is very similar to the previous preferred embodiments, as is believed to be apparent to the skilled person, so some of the features will not be described in detail again but are applicable as described for the other preferred embodiments.

The fourth preferred embodiment differs from the third embodiment in that the filter element (2) is not only suitable for adapting for different radius between main housing part (1b) and complementary housing part (1a), but also allows for an axial offset compensation between a longitudinal axis of the main housing part (1b) and a longitudinal axis of the complementary housing part (1a).

The seal support structure (25) comprises a base (22) and a flange (21) radially extending from the base (22). The flange (21) has a circular shape, but its centre is offset from the longitudinal axis

(A) of the filter media pack (20). While the second seal (24) is arranged as in the third preferred embodiment, and while the first seal (23) is also arranged on (on upper wall 212) and on the opposed side of the flange (21) with respect to the side of the second seal (24), the first seal (23) follows the outer rim (211) of the flange (21). The first seal (23) is thus also circular and lies within a single plane perpendicular to the longitudinal direction (A), and is also offset with respect to the second seal (24). A non-overlap region (N) exists between the areas defined by the perimeters P1 and P2, which is arranged asymmetrically with respect to the first and second closed perimeters. Both perimeters have a different centroid. The non-overlap region (N) has no rotational symmetry. A schematic representation thereof can be retrieved in Fig. 8 (d).

Fig. 8 (a) to (e) illustrate different non-overlap regions in accordance with embodiments of the present disclosure. Fig. 8(a), (b), (d) and (e) are associated with the first four preferred embodiments of the present disclosure, while Fig. (c) illustrates another example, similar to Fig. 8 (a), wherein the first perimeter is not generally square (with rounded corners) but generally rectangular (with rounded corners). Fig. 8(a) and (b) illustrate examples which have not been claimed.

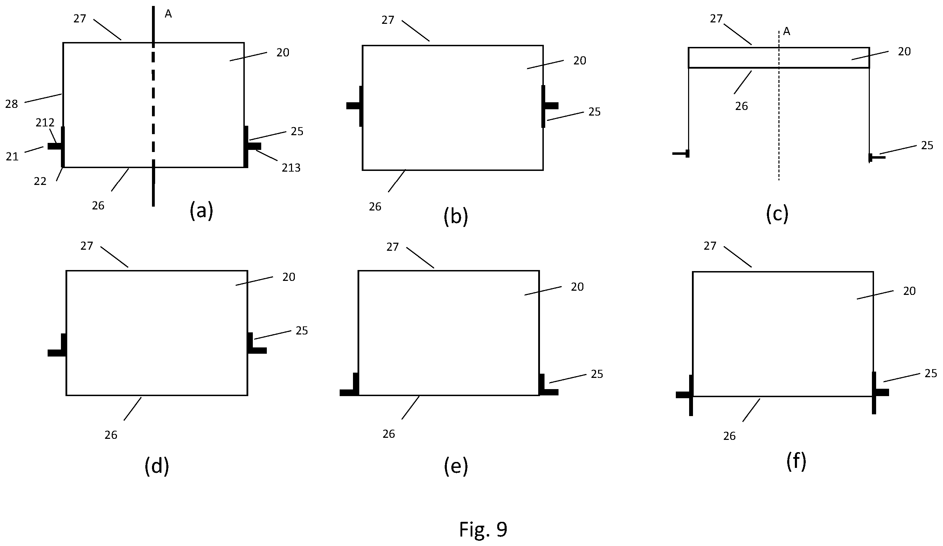

Fig. 9 (a) to (f) schematically illustrate embodiments of the present disclosure with different positioning of a base (22) and radially extending flange (21). The combination of base (22) and flange (21) can have a cross-section in radial direction that generally corresponds to a T-shape or L-shape. The base (22) can extend axially on both sides of the flange (21) (T-shape), or the base (22) can axially extend only on one side of the flange (21) (L-shape). It can be noted that this is not limiting for the present disclosure. Indeed, the combination of base (22) and flange (21) can also have another cross-section, or the cross-section may vary along its contour.

Fig. 9 (a) illustrates embodiments where the seal support structure (25) is of the T-type. The base (22) is configured exactly at the end of the filter media pack (20), abutting the plane corresponding to the and end face (inflow face 26 or outflow face 17). In alternative embodiments, the base (20) can be at a distance within the range of 0 to 1 cm or within the range of 0 to 5 mm from the plane corresponding to the respective end face (26, 27).

Fig. 9 (f) illustrates still other embodiments which are similar to those illustrated by Fig. 9 (a), but wherein the base (22) is arranged also such that it extends beyond the end face (26 or 27). For instance, the end of the base (22) which is most remote of the end face (26 or 27) can be within the range of 0 to 1 cm or within the range of 0 to 5 mm from the plane corresponding to the respective end face (26, 27).

Fig. 9 (b) illustrates still other embodiments which are similar to those illustrated by Fig. 9 (a), but wherein the base (22) is arranged around the sidewall (28) of the filter media pack (20) at a location remote from the inflow and outflow ends (26, 27). In these embodiments also the flange is remote from both filter media pack ends (26, 27), for instance remote for at least 5 cm from both ends, or remote for at least 10 cm from both ends. The radially extending flange (21) can for instance be arranged about halfway between the inlet and outlet faces (26 ,27) of the filter media pack (20).

Fig. 9 (d) illustrates similar embodiments as those illustrated in Fig. 9 (b), wherein the seal support structure (25) is of the L-type.

Fig. 9 (e) illustrates similar embodiments as those illustrated in Fig. 9 (a), wherein the seal support structure (25) is of the L-type. The flange (21) radially extending from the base (22) can be near to an end surface (26,27) of the filter media pack (20), or it can abut the respective end face. The flange (21) can be at a distance within the range of 0 to 1 cm or within the range of 0 to 5 mm from the plane corresponding to the respective end face (26, 27). The radially extending flange (21) can also be arranged axially beyond an end face (26 or 27), when the base (22) axially extends beyond the respective end face. For instance, the flange (21) can extend in a plane that is remote from any of the end faces (i.e., that plane does not cross the filter media pack). For instance, the distance between the flange and a respective end plane can be within the range of 0 to 1 cm or within the range of 0 to 5 mm.

Fig. 9 (c) illustrates a fifth embodiment of a filter element according to the present disclosure. The filter element (2) comprises a filter media pack (20) that is relatively thin (e.g. having a thickness smaller than 10 cm, or smaller than 5 cm), and the sidewall (28) of the filter media pack comprises a shell which extends from the outflow face (27) until far beyond the inflow face (26), for instance for more than 10cm, more than 20 cm or more than 30 cm. At the remote end of the shell, a seal support structure of the T-type of L-type can be arranged on its outer surface, part of which can be defined by a portion of the shell itself, comprising a first seal (23) and a second seal (24). The first and second seals (23, 24) can be arranged for instance in any configuration as described below.

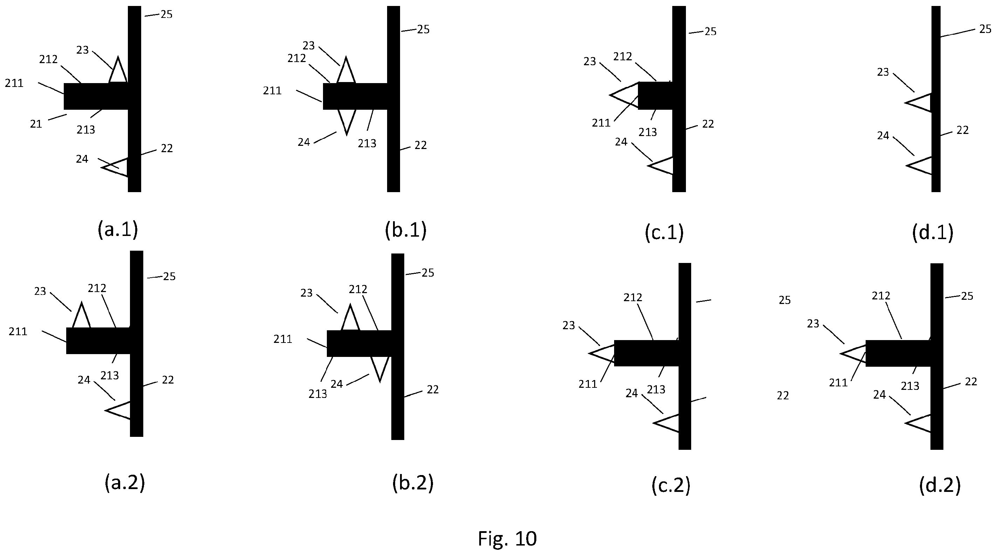

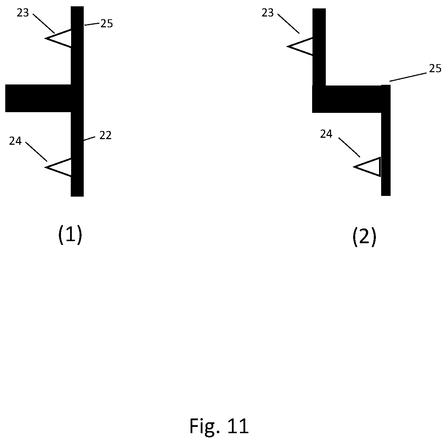

Fig. 10(a) to (d) and Fig. 9 schematically illustrate embodiments of the present disclosure, which comprise a seal support structure (25) with radially extending flange (21). Different options for positioning the first and a second seal (23,24) on the seal support structure (25) are illustrated. Fig. 11 illustrates another embodiment where the seal support structure is locally of a similar shape (T-shape cross-section) but varies in shape along its contour, also giving rise to a non-overlap region of the respective seals in projection.

There exists a strong correlation between the position of the seals and their sealing direction. Indeed, when a seal is arranged on the outer rim (211) of the flange (21) or on the base (22), more generally on a surface parallel to the longitudinal axis (A). It is typically adapted for providing sealing in a radial direction. When a seal is arranged on the flange's sidewalls (upper wall (212) or lower wall (213) of the flange (21)), more generally on a surface perpendicular on the longitudinal direction, the seal is typically adapted for providing sealing in an axial direction.

In the previous figures related to the first to fourth embodiment of the present disclosure, the first seal (23) is arranged on the upper wall (212), while the second seal (24) is arranged on the base (22), on the opposed side of the flange (21) from the side where the first seal (23) resides, but these are exemplary and non-limiting, as illustrated by the claims and further examples of Fig 10 (a) to (d).

The Figures 10(a) to 10(d) come in pairs (e.g., x.1 and x.2; x = a, b, c, d), which illustrate cross-sections of the seal support structure (25) at different angular orientations around the longitudinal axis (A). As can be seen, the radial extent of the flange (21) may vary along its contour (Fig. 10 (c) and (d)). The radial extent of the flange (21) may be even reduced to zero at a certain position along its contour (see Fig. 10 (d.1)).

All the embodiments comprise a non-overlap region of the first and second seals in projection, i.e., the perimeters of their respective projections on a plane perpendicular to the longitudinal direction comprise a non-overlap region.

In Fig. 10 (a) the first seal (23) is positioned on the upper wall (212) of the flange (21). The flange is of constant radial extent, while the relative position of the first seal (23) on the upper wall (212) varies along the contour of the flange (21). The second seal (24) is positioned at constant axial height on the base (22), on the other side of the flange (21) with respect to the side of the first seal (23).

In Fig. 10 (b) the first seal (23) is positioned on the upper wall (212) of the flange (21). The flange is of constant radial extent, and the relative position of the first seal (23) on the upper wall (212) is constant along the contour of the flange (21). The second seal (24) is positioned on the lower wall (213) of the flange (21), and the relative position of the second seal (24) on the lower wall (213) varies along the contour of the flange (21).

In Fig. 10 (c) the first seal (23) is positioned on the outer rim (211) of the flange (21). The flange varies in radial extent, along its contour. The second seal (24) is positioned at constant axial height on the base (22). Fig. 10 (d) is similar to Fig 10 (c), but the radial extent of the flange (21) along its contour becomes zero at a certain position along its contour.

Fig. 11 illustrates a further embodiment of the present disclosure, where the shape of the seal support structure (25) varies along its contour. At a first position, illustrated in Fig. 11 (1), the cross-section of the seal support structure (25) is of the T-shape type. Both first seal (23) and second seal (24) are arranged on the base (22) at opposite sides of the flange (21) and are adapted for sealing in radial direction. At another position along the contour of the seal support structure (25), depicted in Fig. 11 (2), the seal support structure has another cross-sectional shape, which comprises surfaces that are still supporting the first and second seals respectively. E.g., the "upper leg" of the "T" gradually moved from its initial position in Fig. 11(1) towards the end of the "base" of the "T" Fig. 11(2). Such a configuration also comprises a non-overlap region of the first and second seals in projection.

In still other embodiments, the cross-section of the seal support structure can have still other shapes, e.g., different from being T-shaped or L-shaped.

According to a second aspect of the present disclosure, a filter assembly (1,2) is disclosed, comprising a housing (1), the housing comprising a main housing portion (1b) and a complementary housing portion (1a), and a filter element (2) according to any of embodiments of the first aspect.

The first seal (23) forms a seal between the filter element (2) and the complementary housing portion (1a), and the second seal (24) forms a seal between the filter element (2) and the main housing portion (1b).

In cases where the seal support structure (25) of the filter element (2) comprises at least one pass-through (29) for gaseous fluids in an area of the seal support structure corresponding to the non-overlap region, the assembly preferably further comprises a precleaner scavenging tube (1a1) which is connected with the at least one pass-through (29) in the seal support structure (25).

In preferred embodiments, the sidewall of the main housing portion (1b) follows the sidewall (28) of the filter element (2) or filter media pack (20), e.g., also along a concave section (30) of the filter element (2). The volume created by the concave section (130) of the main filter housing portion (1b) can be for instance be used for positioning a scavenging tube for scavenging dust from the complementary housing portion (1a) / precleaner device. Such a scavenging tube can for instance be connected to an appropriate location of an exhaust system to create suction, as is known in the art. The volume created by the concave section (130) of the main filter housing portion (1b) can for instance advantageously be used for positioning fixation means or structures (111) for installing the filter assembly (1,2) to a vehicle (not shown).

According to preferred embodiments, the filter element (2) or the seal supporting structure (25) serves as adaptor between the main housing portion (1b) and the complementary housing portion (1a), in an airtight manner. According to preferred embodiments, the filter element (2) or seal support structure (25) comprises a radially extending flange (21) which bridges the gap between the main housing portion (1b) and the complementary housing portion (1a), in an airtight manner.

While the invention has been described hereinabove with reference to particular embodiments, this was done to clarify and not to limit the invention, the scope of which is to be determined by reference to the accompanying claims. In particular, variations and elements which have only been described in the context of a particular embodiment, may be combined with the features of other embodiments to obtain the same technical effects.

## Claims

1. A filter element (2) for the filtration of gaseous fluids, comprising a filter media pack (20) having a longitudinal axis, and a circumferential seal support structure (25) sealingly coupled to a sidewall of said media pack (20), said seal support structure (25) further comprising a first seal (23) and a second seal (24);
wherein axial projections of said first and said second seal (23, 24) along said longitudinal axis (A) on a plane perpendicular to said longitudinal axis define a first and a second closed perimeter (P1, P2), and wherein the areas corresponding to said first and said second closed perimeter (P1, P2) comprise a non-overlap region (N), **characterised in that** said non-overlap region (N) is arranged asymmetrically with respect to said first and/or said second closed perimeter (P1, P2).

2. Filter element according to claim 1, wherein the areas defined by said closed perimeters (P1,P2) also comprise an overlap region.

3. A filter element according to any of the previous claims, wherein said non-overlap region (N) has a surface which comprises at least 10% of the smallest area of the areas defined by said closed perimeters (P1, P2).

4. A filter element according to any of the previous claims, wherein said non-overlap region (N) has no rotational symmetry.

5. A filter element according to any of the previous claims, wherein the non-overlap region consists of a single area corresponding to a local deviation between the two closed perimeters (P1, P2), and the closed perimeters follow one another/correspond to one another for the other, complementary part of their perimeters.

6. A filter element according to any of the previous claims, wherein the areas defined by said closed perimeters (P1, P2) differ in surface area for at least 10%.

7. A filter element according to any of the previous claims, wherein one of the first perimeter (P1) or the second perimeter (P2) fully encircles the other one.

8. Filter element according to any of the previous claims, wherein said seal support structure comprises at least one pass-through opening (29) for gaseous fluids in an area of said seal support structure (25) corresponding to said non-overlap region (N).

9. Filter element according to any of the previous claims, wherein said seal support structure (25) comprises one or more electronic devices in an area of said seal support structure (25) corresponding to said non-overlap region.

10. A filter element according to any of the previous claims, wherein said first seal (23) and said second seal (24) are separate seals.

11. A filter element according to any of the previous claims, wherein each of said first and said second seals (23, 24) is arranged in a single plane, a first plane and a second plane respectively.

12. A filter element according to any of the previous claims, wherein said first and said second seals (23, 24) follow one another along the circumference of the media pack, except for their respective portions which correspond to the non-overlap region (N).

13. Filter element according to any of the previous claims, wherein the cross section of said filter media pack (20) comprises convex and concave (30) curves.

14. Filter element according to any of the previous claims, wherein said seal support structure (25) comprises a base (22) sealingly coupled to a sidewall of said filter media pack (20) and a flange (21) radially extending from said base (22), said flange (21) having an outer rim (211) and defining a first side and an opposed second side of said flange respective to said longitudinal axis of said filter media pack (20), wherein said first and second seals (23, 24) are arranged on or adjacent to said flange.

15. A filter assembly (1,2), comprising a housing (1), said housing comprising a main housing portion (1b) and a complementary housing portion (1a), and a filter element (2) according to any of claims 1 to 14, wherein said first seal (23) forms a seal between said filter element (2) and said complementary housing portion (1a) and said second seal (24) forms a seal between said filter element (2) and said main housing portion (1b).

## Patentansprüche

1. Filterelement (2) zum Filtern von gasförmigen Fluiden, umfassend eine Filtermedienpackung (20) mit einer Längsachse und eine periphere Dichtungsstützstruktur (25), die abdichtend mit einer Seitenwand der Filtermedienpackung (20) gekoppelt ist, wobei die Dichtungsstützstruktur (25) ferner eine erste Dichtung (23) und eine zweite Dichtung (24) umfasst,
wobei axiale Vorsprünge der ersten und der zweiten Dichtung (23, 24) entlang der Längsachse (A) in einer Ebene, die senkrecht zu der Längsachse liegt, einen ersten und einen zweiten geschlossenen Umfang (P1, P2) definieren und wobei die Bereiche, die dem ersten und dem zweiten geschlossenen Umfang (P1, P2) entsprechen, eine nicht-überlappende Region (N) umfassen, **dadurch gekennzeichnet, dass** die nicht-überlappende Region (N) asymmetrisch zu dem ersten und/oder dem zweiten geschlossenen Umfang (P1, P2) angeordnet ist.

2. Filterelement nach Anspruch 1, wobei die Bereiche, die durch die geschlossenen Umfänge (P1, P2) definiert sind, außerdem eine überlappende Region umfassen.

3. Filterelement nach einem der vorhergehenden Ansprüche, wobei die nicht-überlappende Region (N) eine Oberfläche aufweist, die mindestens 10 % des kleinsten Bereichs der Bereiche umfasst, die durch die geschlossenen Umfänge (P1, P2) definiert sind.

4. Filterelement nach einem der vorhergehenden Ansprüche, wobei die nicht-überlappende Region (N) keine Rotationssymmetrie aufweist.

5. Filterelement nach einem der vorhergehenden Ansprüche, wobei die nicht-überlappende Region aus einem einzelnen Bereich besteht, der einer örtlichen Abweichung zwischen den zwei geschlossenen Umfängen (P1, P2) entspricht, und die geschlossenen Umfänge für den anderen, ergänzenden Teil ihrer Umfänge einander folgen / einander entsprechen.

6. Filterelement nach einem der vorhergehenden Ansprüche, wobei sich die Flächeninhalte der Bereiche, die durch die geschlossenen Umfänge (P1, P2) definiert sind, zu mindestens 10 % unterscheiden.

7. Filterelement nach einem der vorhergehenden Ansprüche, wobei einer des ersten Umfangs (P) und des zweiten Umfangs (P2) den anderen vollständig umgibt.

8. Filterelement nach einem der vorhergehenden Ansprüche, wobei die Dichtungsstützstruktur in einem Bereich der Dichtungsstützstruktur (25), welcher der nicht-überlappenden Region (N) entspricht, mindestens eine durchgehende Öffnung (29) für gasförmige Fluide umfasst.

9. Filterelement nach einem der vorhergehenden Ansprüche, wobei die Dichtungsstützstruktur (25) in einem Bereich der Dichtungsstützstruktur (25), welcher der nicht-überlappenden Region entspricht, eine oder mehrere elektronische Vorrichtungen umfasst.

10. Filterelement nach einem der vorhergehenden Ansprüche, wobei die erste Dichtung (23) und die zweite Dichtung (24) separate Dichtungen sind.

11. Filterelement nach einem der vorhergehenden Ansprüche, wobei die erste und die zweite Dichtung (23, 24) jeweils in einer einzelnen Ebene, einer ersten Ebene beziehungsweise einer zweiten Ebene, angeordnet sind.

12. Filterelement nach einem der vorhergehenden Ansprüche, wobei die erste und die zweite Dichtung (23, 24) einander entlang der Peripherie der Filtermedienpackung folgen, mit Ausnahme ihrer entsprechenden Abschnitte, die der nicht-überlappenden Region (N) entsprechen.

13. Filterelement nach einem der vorhergehenden Ansprüche, wobei der Querschnitt der Filtermedienpackung (20) konvexe und konkave (30) Krümmungen umfasst.

14. Filterelement nach einem der vorhergehenden Ansprüche, wobei die Dichtungsstützstruktur (25) eine Basis (22) umfasst, die abdichtend mit einer Seitenwand der Filtermedienpackung (20) gekoppelt ist, und einen Flansch (21), der sich von der Basis (22) aus radial erstreckt, wobei der Flansch (21) einen Außenrand (211) aufweist und eine erste Seite und eine gegenüberliegende zweite Seite des Flanschs bezüglich der Längsachse der Filtermedienpackung (20) definiert, wobei die erste und die zweite Dichtung (23, 24) an oder nahe dem Flansch angeordnet sind.

15. Filteranordnung (1, 2), umfassend ein Gehäuse (1), wobei das Gehäuse einen Hauptgehäuseabschnitt (1b) und einen komplementären Gehäuseabschnitt (1a) umfasst, sowie ein Filterelement (2) nach einem der Ansprüche 1 bis 14, wobei die erste Dichtung (23) eine Dichtung zwischen dem Filterelement (2) und dem komplementären Gehäuseabschnitt (1a) bildet und die zweite Dichtung (24) eine Dichtung zwischen dem Filterelement (2) und dem Hauptgehäuseabschnitt (1b) bildet.

## Revendications

1. Élément formant filtre (2) pour la filtration de fluides gazeux, comprenant un bloc formant milieu filtrant (20) ayant un axe longitudinal, et une structure de support de joints circonférentiels (25) couplée de manière étanche à une paroi latérale dudit bloc formant milieu (20), ladite structure de support de joints (25) comprenant en outre un premier joint (23) et un second joint (24),
dans lequel des projections axiales dudit premier et dudit second joint d'étanchéité (23, 24) le long dudit axe longitudinal (A) sur un plan perpendiculaire audit axe longitudinal définissent un premier et un second périmètre fermé (P1, P2), et dans lequel les zones correspondant auxdits premier et second périmètres fermés (P1, P2) comprennent une région sans chevauchement (N), **caractérisé en ce que** ladite région sans chevauchement (N) est agencée de manière asymétrique par rapport audit premier et/ou audit second périmètre fermé (P1, P2).

2. Élément formant filtrant selon la revendication 1, dans lequel les zones définies par lesdits périmètres fermés (P1, P2) comprennent également une région de chevauchement.

3. Élément formant filtre selon l'une quelconque des revendications précédentes, dans lequel ladite région sans chevauchement (N) a une surface qui comprend au moins 10 % de la plus petite zone des zones définies par lesdits périmètres fermés (P1, P2).

4. Élément formant filtre selon l'une quelconque des revendications précédentes, dans lequel ladite région sans chevauchement (N) n'a pas de symétrie de rotation.

5. Élément formant filtre selon l'une quelconque des revendications précédentes, dans lequel la région sans chevauchement consiste en une seule zone correspondant à un écart local entre les deux périmètres fermés (P1, P2), et les périmètres fermés se suivent/correspondent l'un à l'autre pour l'autre partie complémentaire de leurs périmètres.

6. Élément formant filtre selon l'une quelconque des revendications précédentes, dans lequel les zones définies par lesdits périmètres fermés (P1, P2) diffèrent en superficie d'au moins 10 %.

7. Élément formant filtre selon l'une quelconque des revendications précédentes, dans lequel l'un du premier périmètre (P1) ou du second périmètre (P2) encercle complètement l'autre.

8. Élément formant filtre selon l'une quelconque des revendications précédentes, dans lequel ladite structure de support de joints comprend au moins une ouverture de passage (29) pour fluides gazeux dans une zone de ladite structure de support de joints (25) correspondant à ladite région sans chevauchement (N).

9. Élément formant filtre selon l'une quelconque des revendications précédentes, dans lequel ladite structure de support de joints (25) comprend un ou plusieurs dispositifs électroniques dans une zone de ladite structure de support de joints (25) correspondant à ladite région sans chevauchement.

10. Élément formant filtre selon l'une quelconque des revendications précédentes, dans lequel ledit premier joint (23) et ledit second joint (24) sont des joints distincts.

11. Élément formant filtre selon l'une quelconque des revendications précédentes, dans lequel chacun desdits premier et second joints (23, 24) est agencé dans un seul plan, respectivement un premier plan et un second plan.

12. Élément formant filtre selon l'une quelconque des revendications précédentes, dans lequel lesdits premier et second joints (23, 24) se suivent le long de la circonférence du bloc formant milieu, à l'exception de leurs portions respectives qui correspondent à la région sans chevauchement (N).

13. Élément formant filtre selon l'une quelconque des revendications précédentes, dans lequel la section transversale dudit bloc formant milieu filtrant (20) comprend des courbes convexes et concaves (30).

14. Élément formant filtre selon l'une quelconque des revendications précédentes, dans lequel ladite structure de support de joints (25) comprend une base (22) couplée de manière étanche à une paroi latérale dudit bloc formant milieu filtrant (20) et une bride (21) s'étendant de façon radiale à partir de ladite base (22), ladite bride (21) ayant un rebord extérieur (211) et définissant un premier côté et un second côté opposé de ladite bride par rapport audit axe longitudinal dudit bloc formant milieu filtrant (20), dans lequel lesdits premier et second joints (23, 24) sont agencés sur ou adjacents à ladite bride.

15. Ensemble filtrant (1, 2), comprenant un logement (1), ledit logement comprenant une portion principale de logement (1b) et une portion complémentaire de logement (1a), et un élément formant filtre (2) selon l'une quelconque des revendications 1 à 14, dans lequel ledit premier joint (23) forme un joint entre ledit élément formant filtre (2) et ladite portion complémentaire de logement (1a) et ledit second joint (24) forme un joint entre ledit élément formant filtre (2) et ladite portion principale de logement (1b) .
